# EUROPEAN PATENT SPECIFICATION

(11) **EP 1 814 720 B1**
(45) Date of publication and mention of the grant of the patent: **20.01.2010**
(21) Application number: 05815086.3
(22) Date of filing: 02.11.2005
(51) Int. Cl.: B29D 11/00, B29C 37/00

(54) **METHOD OF AND APPARATUS FOR DEMOLDING OPHTHALMIC LENSES**
VERFAHREN UND VORRICHTUNG ZUM ENTFORMEN OPHTHALMISCHER LINSEN
PROCEDES ET DISPOSITIF DE DEMOULAGE DE LENTILLES OPHTALMIQUES

(30) Priority: 05.11.2004 US 982232
(43) Date of publication of application: 08.08.2007
(73) Proprietor: Johnson & Johnson Vision Care, Inc., Jacksonville, FL 32256 (US)
(72) Inventor: WATTERSON, Robert, John, Jr., Jacksonville, FL 32259 (US); LEAVITT, Richard, W., Jacksonville, FL 32224 (US); LITWIN, Mark, A., Jacksonville, FL 32246 (US)
(74) Representative: Tunstall, Christopher Stephen
(86) International application number: PCT/US2005/039450
(87) International publication number: WO 2006/052533

(56) References cited:
- EP-A- 0 686 487
- EP-A- 0 775 571
- WO-A-01/30558
- US-A- 5 368 790
- US-A- 5 820 895
- US-A- 5 850 107
- US-A- 6 082 987
- US-A1- 2002 145 211
- US-A1- 2004 051 190

## Description

This invention related to methods for demolding ophthalmic lenses.

### BACKGROUND

Contact lenses have been used commercially to improve vision since the 1950s. The first contact lenses were made of hard materials. Although these lenses are currently used, they are not suitable for all patients due to their poor initial comfort. Later developments in the field gave rise to soft contact lenses, based upon hydrogels, which are extremely popular today. These lenses have higher oxygen permeabilities and such are often more comfortable to wear than contact lenses made of hard materials. However, the beneficial physical properties of these lenses often present manufacturing problems, particularly when soft lenses are demolded.

Many soft contact lenses are manufactured by a process where either partially polymerized or unpolymerized blends of components are placed between male and female mold parts and subsequently polymerized by either or both light and heat. Thereafter the polymerized lens is removed from the mold ("demolded") and processed in subsequent steps (hydration, removal of unreacted components and the like). In some cases either the male or the female mold part is demolded and subsequent processing steps are conducted with the polymerized lens sitting in or adhered to one the remaining mold part. Details these and other demolding process and subsequent steps may be found in the following publications U.S. Pat Nos. 5, 850,107; 5,080,839; 5,039,459; 4,889,664, and 4,495,313.

When the lenses are demolded the pliable lenses can be damaged by the force used to remove either or both the male or female halves of the lens mold. Others have attempted to solve this problem by a variety of methods. In one such attempt, the male mold half is heated prior to the demolding step and subsequently removed. *See*, U.S. Pat. No. 6,663,801. Even though this method is effective, it does not work with all types of soft contact lenses and it would be advantageous to have additional methods of demolding contact lens molds. This need is met by the following invention.

### BRIEF DESCRIPTION OF THE DRAWINGS

Figure 1 is a graph of showing the number of lenses that remained with the female mold part for cooled and non-cooled demold processes.
Figure 2 is a graph showing the number of defects demolded lenses that were cooled and heated prior to demolding.

### DETAILED DESCRIPTION OF THE INVENTION

This invention includes a method of demolding a soft contact lens comprising cooling the lens mold assembly and heating the lens mold assembly prior to demolding the soft contact lens, wherein the soft contact lens is a silicone hydrogel, according to claim 1.

As used herein "ophthalmic lens" refers to a device that resides in or on the eye. These devices can provide optical correction or may be cosmetic. Soft contact lens formulations are disclosed in US Patent No. 5,710,302, WO 9421698, EP 406161, JP 2000016905, U.S. Pat. No. 5,998,498, U.S. Patent No. 6,087,415, U.S. Pat. No. 5,760,100, U.S. Pat. No.5,776, 999, U.S. Pat. No. 5,789,461, U.S. Pat. No. 5,849,811, U.S. Pat. No. 5,965,631, and silicone hydrogels as prepared in U.S. Pat. No. 5,998,498, U.S. Pat. No. 6,822,016, U.S. Patent No. 6,087,415, U.S. Pat. No. 5,760,100, U.S. Pat. No.5,776, 999, U.S. Pat. No. 5,789,461, U.S. Pat: No. 5,849,811, and U.S. Pat. No. 5,965,631. The particularly preferred lenses of the inventions made from etafilcon A, genfilcon A, galifilcon A, senofilcon A, lenefilcon A, Iotrfilcon A, Iotrifilcon B, balifilcon A, or polymacon. More particularly preferred lenses of the invention made from genfilcon A, galifilcon A, senofilcon A, lenefilcon A, lotrfilcon A, lotrifilcon B, or balifilcon A,. The most preferred lenses include but are not limited to galifilcon A, senofilcon A, and lenses disclosed in U.S. Pat. No. 6,822,016.

"Lens mold assembly," refers a combination of three components, a male mold, a female mold and a cured lens. The male and female molds may be made from a variety of components such as plastics, metals and glass. The preferred molds are plastics. Examples of such plastics include but are not limited to materials disclosed in U.S. Pat. App. 2004-0075039 A1. Other mold materials are polymers copolymers, homopolymers and block co-polymers of polystyrene, polypropylene, and polyethylene. Examples of plastic molds are disclosed in the following documents, U.S. Pat Nos. 5,094,609; 4,565,348; and 4,640, 489. The male and female mold need not be of the same material. For example a lens mold assembly having a female mold made of a polypropylene and a male mold made of an alicyclic co-polymer of norbonene may be used. The particularly preferred mold material is an alicyclic co-polymer that contains two different alicyclic monomers and is sold by Zeon Chemicals L.P. under the tradename ZEONOR. There are several different grades of ZEONOR, having of glass transition temperatures form 105-160°C. The particularly preferred ZEONOR, is ZEONOR 1060R, which according to the manufacturer, ZEON Chemicals L.P. has a melt flow rate ("MFR") range of 11:0 grams/10 minutes to 18.0 gram/10 minutes (as tested JISK 6719 (230°C)), a specific gravity (H₂O =1) of 1.01 and a glass transition temperature of 105°C.

As used herein "cooling" refers to any method of reducing the temperature of the lens mold assembly. In the process of curing ophthalmic lenses, the lens mold assembly is heated and subjected to radiation. When this assembly leaves the curing portion of the manufacturing process, the temperature of the assembly is about 50 to about 70°C. This heated lens mold assembly is cooled by one of the methods described below and prior to demolding. It is preferred that the lens mold assembly be cooled to a temperature of about 0°C to about less than 45°C, more preferably about 3 °C to less than about 30°C.

One method of cooling the lens mold assembly is to blow compressed air on the lens mold assembly where the temperature of the forced air is about -40°C to about +5°C and the rate of air flow (standard cubic feet per minutes, "SCFM") is about 5 SCFM to about 100 SCFM, preferably about 18 SCFM. The forced air can be directed at the entire lens mold assembly or a particular part of the lens mold assembly. For example, forced air may be directed at either the female mold's non-molding surface (convex surface) or the male mold's non-molding surface (concave surface). When using the forced air method it is preferred that the forced air is directed to the concave surface of the male mold.

Another method of cooling the lens mold assembly is to blow solid CO₂ particles on the lens assembly. The temperature of those particles is about -60 to about -O°C, preferably about -50°C. Those particles are discharged at a rate of about 0.5 SCFM to about 10 SCFM, preferably about 3 SCFM. Solid CO2 may be directed to the entire lens mold assembly or a portion thereof. It is preferred that the solid CO₂ be directed to the non-molding surface of the male mold. Other methods of cooling the lens mold assembly include but are not limited to allowing the assembly to come to room temperature, placing the assembly in a refrigerated chamber, placing the assembly in the proximity of a thermoelectric chiller or a cool liquid, such as ice water. The preferred methods of cooling are using forced cold air or solid CO₂ particles.

As used herein the term "heating" refers to any method of elevating the temperature of the lens mold assembly including but not limited to applying steam, forced hot air, or heat to the lens mold assembly. Examples of such heating methods may be found in the following references EP 775,571; EP 686,487; U.S. Pat. App. No. 2002/0145,211; U.S. Pat Nos. 5,820,895; 6,171,529; 5,850,107; 5,294,379; 5,935,492; and 5,770,119. Either the entire lens mold assembly may be heated or a portion thereof. One method of heating the lens mold assembly uses a silicon carbide infra-red emitter and is disclosed in U.S. Pat. No. 6,663,801. If this heating method is used the heat is applied to the non-molding surface of either the male or the female mold part. It is particularly preferred that heat is applied to the non-molding surface of the male mold.

After the male mold of the lens mold assembly is heated, the male mold may be demolded using shims, pry fingers, or other types of mechanical leverage. *See*, EP 775,571; EP 686,487; U.S. Pat. App. No. 2002/0145,211; U.S. Pat Nos. 5,820,895; 6,171,529; 5,850,107; 5,294,379; 5,935,492; and 5,770,119 for experimental details. In addition to or instead of the mechanical leverage, the male molds may be removed by applying a vacuum to the male molds to demold it. It is preferred that a combination of mechanical means and vacuum is used to demold the male mold member.

The methods of this invention have many advantages. Most ophthalmic lenses are made.in a manufacturing environment where speed from processing station to processing station is important. Using the cooling and subsequent heating steps of this invention significantly shorten the period of time between the exit of the lens from the curing area and demolding of the lens. It is preferred that the period of time between removing the lens from the curing area and demolding the lens be less than about 20 seconds, preferably less, than about 15, seconds, more preferably less than about 10 seconds.

A further advantage of the invention is that by cooling and subsequently heating either the male or the female mold member, one can remove the heated mold and leave the lens sitting in or adhered to the non-heated mold part. This is an advantage because some manufacturing processes require that subsequent processing steps (hydration, excess monomer removal, and the like) are conducted in either the male or female lens mold.

Another advantage of this invention is that fewer of the ophthalmic lenses are damaged by the demolding process. This is demonstrated by the reduced number of demolded lenses with mold related defects such as tears, chips, surface marks, surface tears. When ophthalmic lenses made of galificon A are demolded by removing the lenses from the curing area and heating the male mold member as described in U.S. Pat. No. 6,663,801, the lenses have approximately 30-70% percent of the lenses have mold related defects. When ophthalmic lenses are cooled with cooled air or solid CO₂ particles and subsequently heated prior to demolding, about 10-15% of those lenses have mold related defects.

In addition the invention includes an apparatus suitable for cooling and heating a lens mold assembly prior to demolding the assembly comprising a cooling component and a heating component, wherein the cooling component produces solid CO₂ particles, according to claim 17. The terms cooling, heating lens mold assembly, and demolding all have their aforementioned meanings and preferred ranges. The preferred cooling components are solid CO₂ blowers. The preferred heating components are infra-red heaters.

In order to illustrate the invention the following examples are included. These examples do not limit the invention. They are meant only to suggest a method of practicing the invention. Those knowledgeable in the production of lenses as well as other specialties may find other methods of practicing the invention. However, those methods are deemed to be within the scope of this invention, as defined by the claims.

### EXAMPLES

### Demolding Using Forced Air

### Example 1

Due to the constraints of the downstream processing steps it was desirable for the male mold member to be removed from the cured lens assembly and for the cured lens to remain with the female mold member. This example evaluates whether the cured lenses remain with the female mold member after demold.

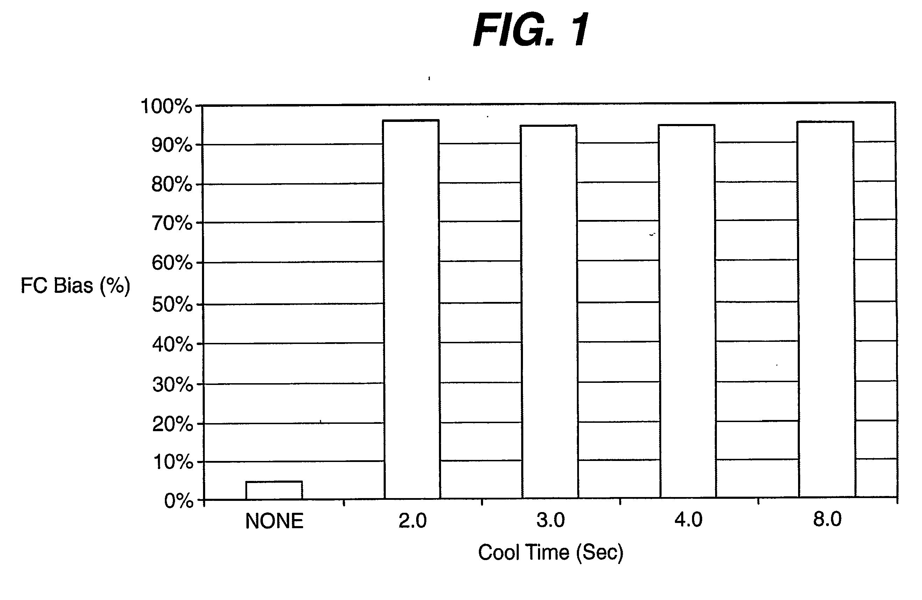

The uncured monomer used to prepare galifilcon A was placed between a male and a female mold halves made of Zeonor and cured as describe in U.S. Pat App. No. 60/318, 536 and U.S. Serial No. 10/236,538. The temperature of the cured lens mold assembly was approximately 65°C. The concave surface of the male molding member was heated with a silicon infra-red heater and demolded as described in U.S. Pat. No. 6,663,801. Some lens mold assemblies were cooled by blowing cold air (-40°C, 18 SCFM) on the concave surface of the male mold for 2, 3, 4, or 8 seconds. The cooled lens assembly was heated with a silicon infra-red heater and demolded as described in U.S. Pat. No. 6,663,801. The demolded lenses were evaluated to determine if they remained with the female mold member. The results are presented in Figure 1. This figure shows that without cooling prior to demold less than 5% of the lenses remain with the female mold member.

### Demolding Using Solid CO₂

### Example 2

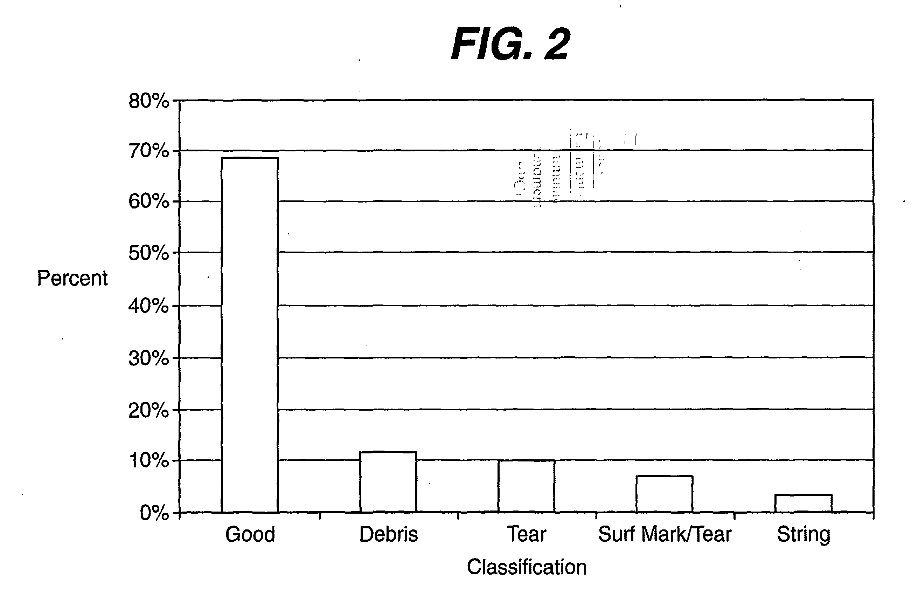

This example evaluates defects in the cured lenses due to demolding. The uncured monomer used to prepare galifilcon A was placed between a male and a female mold halves made of Zeonor and cured as describe in U.S. Pat App. No. 60/318, 536, and U.S. Serial No. 10/236,538. The temperature of the cured lens mold assembly was approximately 65°C. Lens mold assemblies were cooled by blowing solid CO₂ (-50°C, 3 SCFM) on the concave surface of the male mold for about 2 seconds. The cooled lens assembly was heated with a silicon infra-red heater and demolded as described in U.S. Pat. No. 6,663,801. All of the demolded lenses remained with the female mold member. These lenses were evaluated to determine how many mold related defects such as tears , surface marks/tears, strings, and debris are found in the demolded lenses. The results are presented in Figure 2. This figure shows that using the cooling demolding technique yields that have only 15% mold related defects (tears, surface mark/tears). This number is lower than the amount of mold related defects that are present (30-70%) when cooling is not used.

## Claims

1. A method of demolding a soft contact lens comprising cooling the lens mold assembly and heating the lens mold assembly prior to demolding the soft contact lens, **characterised in that** the soft contact lens is a silicone hydrogel.

2. The method of claim 1 wherein the soft contact lens comprises etafilcon A, genfilcon A, galifilcon A, senofilcon A, lenefilcon A, lotrfilcon A, lotrifilcon B, balifilcon A, or polymacon.

3. The method of claim 1 wherein the soft contact lens comprises galifilcon A or senofilcon A.

4. The method of claim 1 wherein the lens mold assembly is cooled to a temperature of about 0°C to about 40°C.

5. The method of claim 1 wherein the lens mold assembly is cooled by forced cold air.

6. The method of claim 1 wherein the lens mold assembly is cooled by solid CO₂ particles.

7. The method of claim 1 wherein the male mold part of the lens mold assembly is cooled by forced cold air or solid CO₂ particles.

8. The method of claim 7 wherein the lens mold assembly is cooled to a temperature of about -25°C to about +40°C.

9. The method of claim 6 wherein the lens mold assembly is cooled to a temperature of about -25°C to about +10°C.

10. The method of claim 7 wherein the male mold assembly is cooled.

11. The method of claim 9 wherein the male mold assembly is heated.

12. The method of claim 11 wherein the temperature of the lens mold assembly is about 20°C to about 40°C.

13. The method of claim 11 wherein the temperature of the lens mold assembly is about 25°C to about 30°C.

14. The method of claim 13 wherein the steps of cooling occurs in less than 10 seconds.

15. The method of claim 13 wherein the steps of cooling and heating occur in about 9 to about 20 seconds.

16. The method of claim 13 wherein the steps of cooling and heating occur in less than about 12 seconds.

17. An apparatus suitable for cooling and heating a lens mold assembly prior to demolding the assembly comprising a cooling component and a heating component, **characterised in that** the cooling component produces solid CO₂ particles.

18. The apparatus of claim 17 wherein the cooling component cools the lens assembly to about -25°C to about +10°C.

19. The apparatus of claim 17 wherein the heating component heats the lens assembly to about 20°C to about 40°C.

20. The apparatus of claim 17 wherein the cooling and heating occur in about 9 to about 20 seconds.

## Patentansprüche

1. Verfahren zum Entformen einer weichen Kontaktlinse, das das Kühlen der Linsenformanordnung und das Heizen der Linsenformanordnung vor dem Entformen der weichen Kontaktlinsen aufweist, **dadurch gekennzeichnet, dass** die weiche Kontaktlinse ein Silikon-Hydrogel ist.

2. Verfahren nach Anspruch 1, bei dem die weiche Kontaktlinse Etafilcon A, Genfilcon A, Galifilcon A, Senofilcon A, Lenefilcon A, Lotrafilcon A, Lotrafilcon B, Balifilcon A oder Polymacon aufweist.

3. Verfahren nach Anspruch 1, bei dem die weiche Kontaktlinse Galifilcon A oder Senofilcon A aufweist.

4. Verfahren nach Anspruch 1, bei dem die Linsenformanordnung auf eine Temperatur von ungefähr 0°C bis ungefähr 40°C gekühlt wird.

5. Verfahren nach Anspruch 1, bei dem die Linsenformanordnung durch kalte Zwangsluft gekühlt wird.

6. Verfahren nach Anspruch 1, bei dem die Linsenformanordnung durch feste CO₂-Teilchen gekühlt wird.

7. Verfahren nach Anspruch 1, bei dem das männliche Formteil der Linsenformanordnung durch kalte Zwangsluft oder feste CO₂-Teilchen gekühlt wird.

8. Verfahren nach Anspruch 7, bei dem die Linsenformanordnung auf eine Temperatur von ungefähr - 25°C bis ungefähr + 40°C gekühlt wird.

9. Verfahren nach Anspruch 6, bei dem die Linsenformanordnung auf eine Temperatur von ungefähr - 25°C bis ungefähr + 10°C gekühlt wird.

10. Verfahren nach Anspruch 7, bei dem die männliche Formanordnung gekühlt wird.

11. Verfahren nach Anspruch 9, bei dem die männliche Formanordnung geheizt wird.

12. Verfahren nach Anspruch 11, bei dem die Temperatur der Linsenformanordnung ungefähr 20°C bis ungefähr 40°C beträgt.

13. Verfahren nach Anspruch 11, bei dem die Temperatur der Linsenformanordnung ungefähr 25°C bis ungefähr 30° beträgt.

14. Verfahren nach Anspruch 13, bei dem der Schritt des Kühlens in weniger als 10 Sekunden geschieht.

15. Verfahren nach Anspruch 13, bei dem die Schritte des Kühlens und Heizens in ungefähr 9 bis ungefähr 20 Sekunden geschehen.

16. Verfahren nach Anspruch 13, bei dem die Schritte des Kühlens und des Heizens in weniger als ungefähr 12 Sekunden geschehen.

17. Vorrichtung, die zum Kühlen und Heizen einer Linsenformanordnung vor dem Entformen der Anordnung geeignet ist, mit einer Kühlkomponente und einer Heizkomponente, **dadurch gekennzeichnet, dass** die Kühlkomponente feste CO₂-Teilchen erzeugt.

18. Vorrichtung nach Anspruch 17, bei der die Kühlkomponente die Linsenanordnung auf ungefähr - 25°C bis ungefähr + 10°C kühlt.

19. Vorrichtung nach Anspruch 17, bei der die Heizkomponente die Linsenanordnung auf ungefähr 20°C bis ungefähr 40°C heizt.

20. Vorrichtung nach Anspruch 17, bei der das Kühlen und Heizen in ungefähr 9 bis ungefähr 20 Sekunden geschieht.

## Revendications

1. Procédé pour démouler une lentille de contact souple, comprenant le refroidissement de l'assemblage de moule de lentille et le chauffage de l'assemblage de moule de lentille avant démoulage de la lentille de contact souple, **caractérisé en ce que** la lentille de contact souple est un hydrogel de silicone.

2. Procédé selon la revendication 1, dans lequel la lentille de contact souple comprend de l'étafilcon A, du genfilcon A, du galyfilcon A, du sénofilcon A, du lénéfilcon A, du lotrafilcon A, du lotrafilcon B, du balafilcon A ou du polymacon.

3. Procédé selon la revendication 1, dans lequel la lentille de contact souple comprend du galyfilcon A ou du sénofilcon A.

4. Procédé selon la revendication 1, dans lequel l'assemblage de moule de lentille est refroidi à une température d'environ 0°C à environ 40°C.

5. Procédé selon la revendication 1, dans lequel l'assemblage de moule de lentille est refroidi par de l'air froid forcé.

6. Procédé selon la revendication 1, dans lequel l'assemblage de moule de lentille est refroidi par des particules solides de CO₂.

7. Procédé selon la revendication 1, dans lequel la partie de moule mâle de l'assemblage de moule de lentille est refroidi par de l'air froid forcé ou des particules solides de CO₂.

8. Procédé selon la revendication 7, dans lequel l'assemblage de moule de lentille est refroidi à une température d'environ -25°C à environ +40°C.

9. Procédé selon la revendication 6, dans lequel l'assemblage de moule de lentille est refroidi à une température d'environ -25°C à environ +10°C.

10. Procédé selon la revendication 7, dans lequel l'assemblage de moule mâle est refroidi.

11. Procédé selon la revendication 9, dans lequel l'assemblage de moule mâle est chauffé.

12. Procédé selon la revendication 11, dans lequel la température de l'assemblage de moule de lentille est d'environ 20°C à environ 40°C.

13. Procédé selon la revendication 11, dans lequel la température de l'assemblage de moule de lentille est d'environ 25°C à environ 30°C.

14. Procédé selon la revendication 13, dans lequel les étapes de refroidissement ont lieu en moins de 10 secondes.

15. Procédé selon la revendication 13, dans lequel les étapes de refroidissement et de chauffage ont lieu en environ 9 à environ 20 secondes.

16. Procédé selon la revendication 13, dans lequel les étapes de refroidissement et de chauffage ont lieu en moins d'environ 12 secondes.

17. Dispositif adapté pour refroidir et chauffer un assemblage de moule de lentille avant démoulage, l'assemblage comprenant un composant refroidissant et un composant chauffant, **caractérisé en ce que** le composant refroidissant produit des particules solides de CO₂.

18. Dispositif selon la revendication 17, dans lequel le composant refroidissant refroidit l'assemblage de lentille à une température d'environ -25°C à environ +10°C.

19. Dispositif selon la revendication 17, dans lequel le composant chauffant chauffe l'assemblage de lentille à une température d'environ 20°C à environ 40°C.

20. Dispositif selon la revendication 17, dans lequel le refroidissement et le chauffage ont lieu en environ 9 à environ 20 secondes.
